# FASCICULE DE BREVET EUROPEEN

(11) **EP 1 948 566 B1**
(45) Date de publication et mention de la délivrance du brevet: **24.10.2012**
(21) Numéro de dépôt: 06831110.9
(22) Date de dépôt: 13.11.2006
(51) Int. Cl.: C01F 5/28

(54) **OXYFLUORURE SOUS FORME DE FILM ET PROCEDE DE PREPARATION**
PORÖSES NANOSTRUKTURIERTES OXIDFLUORID
POROUS NANOSTRUCTURED OXYFLUORIDE

(30) Priorité: 17.11.2005 FR 0511659
(43) Date de publication de la demande: 30.07.2008
(73) Titulaire: UNIVERSITE PIERRE ET MARIE CURIE, 75005 Paris (FR); Centre National de la Recherche Scientifique, 75016 Paris (FR)
(72) Inventeur: GROSSO, David, F-91630 Cheaptainville (FR); BOISSIERE, Cédric, F-91140 Villebon Sur Yvette (FR); SANCHEZ, Clément, F-91440 Bure Sur Yvette (FR)
(74) Mandataire: Sueur, Yvette
(86) Numéro de dépôt international: PCT/FR2006/002510
(87) Numéro de publication internationale: WO 2007/057551

(56) Documents cités:
- EP-A- 0 416 119
- WO-A-02/089175
- WO-A-2004/075308
- WO-A-2005/081710
- WO-A-2005/097695
- WO-A-2005/120154
- US-A- 4 492 721
- US-A- 5 051 278
- US-A- 5 271 956
- US-A- 5 997 621
- US-B1- 6 486 245
- FUJIHARA SHINOBU ET AL: "Controlling factors for the conversion of trifluoroacetate sols into thin metal fluoride coatings" J SOL GEL SCI TECHNOL; JOURNAL OF SOL-GEL SCIENCE AND TECHNOLOGY DEC 2000 KLUWER ACADEMIC PUBLISHERS, DORDRECHT, NETHERLANDS, vol. 19, no. 1-3, 20 septembre 1999 (1999-09-20), pages 311-314, XP002392199
- TADA MUNEHIRO ET AL: "Sol-gel processing and characterization of alkaline earth and rare-earth fluoride thin films" J MATER RES; JOURNAL OF MATERIALS RESEARCH 1999 MATERIALS RESEARCH SOCIETY, WARRENDALE, PA, USA, vol. 14, no. 4, 1999, pages 1610-1616, XP002392202
- RUSSEL CHRISTIAN: "Pyrolytic route to fluoride glasses. I. Preparation and thermal decomposition of metal trifluoroacetates" J NON CRYST SOLIDS; JOURNAL OF NON-CRYSTALLINE SOLIDS FEB 1 1993, vol. 152, no. 2-3, 1 février 1993 (1993-02-01), pages 161-166, XP002392200
- FUJIHARA S ET AL: "Sol-gel synthesis of inorganic complex fluorides using trifluoroacetic acid" JOURNAL OF FLUORINE CHEMISTRY, ELSEVIER SEQUOIA, LAUSANNE, CH, vol. 105, no. 1, 1 juillet 2000 (2000-07-01), pages 65-70, XP004216206 ISSN: 0022-1139
- FUJIHARA SHINOBU ET AL: "Preparation and characterization of MgF2 thin film by a trifluoroacetic acid method" THIN SOLID FILMS; THIN SOLID FILMS JUL 30 1997 ELSEVIER SCIENCE S.A., LAUSANNE, SWITZERLAND, vol. 304, no. 1-2, 30 juillet 1997 (1997-07-30), pages 252-255, XP002392201
- FUJIHARA S ET AL: "Sol-gel preparation and optical properties of MgF2 thin films containing metal and semiconductor nanoparticles" SCRIPTA MATER; SCRIPTA MATERIALIA MAY 18 2001, vol. 44, no. 8-9, 18 mai 2001 (2001-05-18), pages 2031-2034, XP002451700 cité dans la demande
- BAUSA L E ET AL: "CaF2:Er<3+> molecular beam epitaxial layers as optical waveguides" APPL PHYS LETT; APPLIED PHYSICS LETTERS JUN 3 1996 AMERICAN INST OF PHYSICS, WOODBURY, NY, USA, vol. 68, no. 23, 3 juin 1996 (1996-06-03), pages 3242-3244, XP002451702

## Description

La présente invention concerne un oxyfluorure poreux nanostructuré, un procédé pour son élaboration, ainsi que diverses applications.

Les matériaux à faible constante diélectrique sont recherchés dans divers domaines techniques, tels que la microélectronique ou l'optique. Dans diverses applications, on recherche des matériaux diélectriques qui ont en outre un indice de réfraction faible. Parmi les matériaux actuellement utilisés, les silices poreuses présentent l'indice de réfraction le plus faible (1,2), sachant que celui de l'air est de 1,002 et celui de la silice dense est 1,47.

Le fluorure de magnésium présente un indice de réfraction relativement faible et divers procédés pour le préparer sont connus.

Par JP-05-105424, on connaît un procédé pour la préparation d'un film anti-réfléchissant de MgF₂, consistant à appliquer sur un substrat une solution contenant soit un précurseur de Mg et un précurseur de F, soit de fines particules de MgF₂. Le précurseur de Mg peut être un sulfate, un nitrate, un phosphate hydratés ou non, un alcoxyde. Le précurseur de F est un fluorure de métal alcalin ou d'ammonium quaternaire. Par Fujihara, et al., Journal of Sol-Gel Science and Technology, 19, 311-314, 2000, on connaît un procédé pour la préparation d'un film MgF_{2.}

Par Fujihara, et al., [Scripta Mater. 2001, 44, 2031-2034], on connaît un procédé pour la préparation par voie sol-gel de films de MgF₂ contenant des nanoparticules de Ag. Le procédé consiste à préparer une solution d'acétate de magnésium dans l'isopropanol et à y ajouter CF₃COO₂H et H₂O, puis l'acétate d'argent, à agiter la solution pendant 2 heures, puis à l'appliquer sur un substrat de verre de silice par enduction centrifuge (spin coating). Ensuite, le substrat revêtu est soumis à un traitement thermique à 300°C-500°C pendant 10 min à l'air, puis à une trempe. L'indice de réfraction du produit obtenu dépend de la température du traitement thermique ; il est de 1,31 pour 300°C, de 1,29 pour 400°C et de 1,25 pour 500°C.

Par Fujihara, et al., [Thin Solid Films, 2001, 389, 227-232], on connaît un procédé pour la préparation par voie sol-gel de films de MgF₂ contenant des nanoparticules de ZnO. Le procédé comprend une étape de préparation d'une solution d'acétate de magnésium dans l'isopropanol IPA avec addition de CF₃COO₂H et H₂O, une étape d'agitation de la solution pendant 1 h, puis maintien à 90°C pendant une semaine pour obtenir un gel d'acétate précurseur, et étape de dissolution du gel dans IPA, puis addition d'acétate de Zn et de méthanolamine et agitation de la solution, et une étape d'application sur un substrat de verre de silice par spin coating, puis chauffage immédiat à diverses températures entre 300 et 500°C pendant des durées de 5 à 14 min selon les échantillons. Les indices de réfraction sont analogues à ceux mentionnés ci-dessus.

Le but de la présente invention est de proposer un matériau qui a un indice de réfraction plus faible que celui des silices poreuse, et qui a en outre une bonne tenue mécanique.

Un matériau selon la présente invention est constitué par un film d'oxyfluorure sur un substrat, caractérisé en ce que :
- l'oxyfluorure a une structure semi-cristalline poreuse et un indice de réfraction de 1,08 à 1,25, mesuré dans le visible pour un taux d'humidité relative inférieur à 80% et une composition chimique correspondant à la formule (Mg₍₁₋ₓ₎Caₓ)_{(1-y)}M_{y}F_{(2+(n-2)y-2z-t)}O_{z}(OH)ₜM'_{w} dans laquelle :
   ● n'est la valence de M, n étant de 1 à 4 ;
   ● M représente au moins un élément choisi parmi Al, Si, Ge, et Ga ;
   ● M' représente au moins un élément choisi dans le groupe constitué par Co, Cr, Ni, Fe, Cu, Sb, Ag, Pd, Cd, Au, Sn, Pb, Ce, Nd, Pr, Eu, Yb, Tb, Dy, Er et Gd ;
   ● 0 ≤ w < 0,1 ; 0 ≤ x ≤ 1 ; 0 ≤ y ≤ 0,5 ; z < 1, t < 2, et z+t>0 ;
- le film est constitué d'une seule couche et il a une épaisseur de 100 nm à 2 µm.

De préférence z+t est supérieur à 0,01, plus particulièrement supérieur à 0,1.

Dans la structure semi-cristalline poreuse du matériau selon la présente invention:
● le volume de pores est supérieur ou égal à 50% ;
● le diamètre de pores est inférieur ou égal à 100 nm ;
● la paroi des pores est constituée par l'assemblage de particules élémentaires semi-cristallines d'oxyfluorure et son épaisseur est inférieure ou égalé à 50 nm.

Dans un mode de réalisation, la surface des pores comprend des groupes OH reliés à l'un des centres métalliques du composé (Mg, Ca, M ou M'), et elle présente un caractère hydrophile.

Dans un autre mode de réalisation, les centres métalliques à la surface des pores du composé sont complexés par des groupements perfluorés (par exemple des groupements perfluorophosphonate). Ces groupements rendent la surface hydrophobe.

Un matériau selon l'invention pour lequel w = 0 est un composé répondant à la formule

(Mg₍₁₋ₓ₎Caₓ)_{(1-y)}M_{y}F_{[2+(n-2)y-2z-t]}O_{z}(OH)ₜ.

Lorsque y est 0, l'oxyfluorure répond à la formule Mg₍₁₋ₓ₎CaₓF_{(2-2z-t)}O_{z}(OH)ₜ.

L'oxyfluorure contient uniquement Mg lorsque x = 0 et répond à la formule MgF_{(2-2z-t)}O_{z}(OH)ₜ, et uniquement Ca lorsque x = 1 et il répond à la formule CaF_{(2-2z-t)}O_{z}(OH)ₜ.

Lorsque x et/ou y sont différents de 0, certaines propriétés du matériau peuvent être ajustées en choisissant de manière appropriée le ou les élément(s) M et la valeur de x et/ou y.

L'élément M' est choisi parmi les éléments utilisés habituellement comme élément dopant. M' peut être par exemple Eu pour des matériaux destinés à la photoluminescence, ou Pt pour des matériaux destinés à la détection d'hydrogène. Un matériau selon l'invention pour lequel w ≠ 0 est un composé dans lequel le matériau de matrice est dopé par le ou les éléments M'.

Les oxyfluorures poreux de la présente invention ont un indice de réfraction très faible, entre 1,08 et 1,25, mesurée dans le visible pour un taux d'humidité relative inférieur à 80%. Ils sont stables à l'air, aux températures élevées (généralement jusqu'à 600°C) et aux solvants usuels tels que l'eau ou l'éthanol. Ils ont en outre une bonne stabilité mécanique, déterminée par un module de Young E entre 20 et 500 Mpa (mesuré par contraction de la couche perpendiculaire à la surface sous tension capillaire avec de l'eau).

Le substrat qui porte le film d'oxyfluorure est de préférence choisi parmi les matériaux métalliques ou les oxydes connus comme supports minéraux optiques. A titre d'exemple, on peut citer le silicium, la silice, le mica, l'alumine, ou l'or.

Lorsque des composés ou des particules sont déposées sur un film d'oxyfluorure selon la présente invention, seuls les pores situés directement sous la surface du film d'oxyfluorure sont accessibles aux composés ou aux particules, malgré le taux de porosité élevé et la dimension des pores. Les pores sous-jacents restent inaccessibles.

Un matériau selon la présente invention est obtenu à partir d'un seul film monocouche d'une solution de précurseurs déposé en une seule étape sur un substrat.

Plus particulièrement, le procédé de préparation d'un film d'oxyfluorure comprend les étapes suivantes :
- dépôt d'un film sur un substrat, à partir d'une solution contenant au moins un précurseur de Mg et/ou un moins un précurseur de Ca, au moins un précurseur de F, éventuellement au moins un précurseur de M, éventuellement au moins un précurseur de M' dans un solvant volatil ;
- évaporation du solvant et des éventuels composés volatils susceptibles de se former comme sous-produits de la réaction entre les précurseurs ;
- traitement thermique consistant en une trempe à une température entre 300°C et 600°C, puis maintien à la température de trempe ;
et il est caractérisé en ce que le film de solution de précurseurs est un film monocouche déposé en une seule étape sur le substrat, les conditions de dépôt dudit film de solution monocouche étant choisies de manière à obtenir, après traitement thermique, un film ayant une épaisseur entre.100 nm et 2 µm en une seule couche.

Le film de solution peut être déposé sur le substrat par les procédés classiques de dépôt par voie liquide, tels que par exemple l'enduction centrifuge (spin coating), le trempage (dip-coating), ou le dépôt par pulvérisation (spray-coating). La détermination des conditions spécifiques à chaque technique de dépôt du film de solution, pour l'obtention de l'épaisseur souhaitée, est à la portée de l'homme de métier.

De manière générale, la solution de précurseurs a une teneur en précurseurs des ions métalliques (Mg, Ca, M et/ou M') telle que la concentration en ions métalliques soit de 0,1 M à 3 M, de préférence de 0,5 M à 1,5 M. En outre, la solution de précurseurs a une teneur en précurseur de fluor telle que le rapport AF/IM "atome de fluor" / "ions métalliques" soit de 1 à 20, de préférence de 3 à 12.

Lorsque la concentration en ions métalliques de la solution de précurseurs est inférieure à 0,1 M, il devient difficile, voire impossible d'obtenir une couche d'oxyfluorure ayant une épaisseur d'au moins 100 nm en une seule étape de dépôt. Lorsque la concentration en ions métalliques de la solution de précurseurs est supérieure à 3 M, la viscosité de la solution est trop élevée pour permettre l'obtention d'un film homogène.

Une diminution du rapport AF/IM a pour effet une diminution de la porosité dans l'oxyfluorure préparé. Lorsque le rapport AF/IM est inférieur à 1, le film obtenu après traitement thermique a une porosité très faible, de sorte que l'indice de réfraction devient supérieur à 1,25. Une augmentation du rapport AF/IM a pour effet une diminution de la mouillabilité du substrat. Lorsque le rapport AF/IM est supérieur à 20, la mouillabilité du substrat est trop faible pour permettre l'obtention de films homogènes d'oxyfluorure.

Lorsque les précurseurs de l'oxyfluorure sont appliqués sur un substrat par trempage, ledit substrat est trempé dans une solution de précurseurs telle que définie ci-dessus, puis il en est retiré avec une vitesse qui détermine l'épaisseur du film. La vitesse de retrait appropriée en fonction de la concentration de la solution de précurseurs et de l'épaisseur de film souhaitée peut être déterminée par des essais de routine. De manière générale, une concentration plus élevée permet une vitesse de retrait plus faible pour l'obtention d'une épaisseur donnée. Par ex.emple, pour des solutions de précurseurs telles que définies ci-dessus, les épaisseurs de film d'oxyfluorure souhaitées peuvent généralement être obtenues avec une vitesse de retrait de 0,1 à 8 mm par seconde, de préférence de 0,5 à 5 mm par seconde, dans les conditions normales de température et de pression et à une humidité relative comprise entre 5% et 80% (typiquement inférieure à 20%).

Dans un mode de réalisation particulier, le traitement thermique peut être suivi par une étape facultative visant à rendre hydrophobe la paroi des pores, et par conséquent toute la surface accessible du film d'oxyfluorure appliqué sur le substrat.

Le solvant de la solution de précurseurs est choisi parmi les solvants organiques volatils, par exemple l'eau, l'acétone ou l'éthanol.

Un précurseur de l'un des éléments Mg, Ca, M ou M' peut être un sel organique, un sel inorganique, un alcoxyde ou un complexe organique dudit élément, choisi de sorte que la partie cationique se combine avec F⁻ provenant du précurseur de fluor, O²⁻ provenant de l'O₂ ambiant, et avec OH⁻ provenant du solvant si le solvant est l'eau, ou de l'humidité atmosphérique, et que l'anion disparaisse lors du traitement thermique. Comme exemple, on peut citer l'acétate de Mg, de Ca ou de M, le tétraéthoxysilane précurseur de Si, et les chlorures des différents éléments M'.

Un composé précurseur de fluor peut être choisi parmi les composés organiques comprenant un groupement donneur d'électrons complexant lié à un groupement fluoré ou perfluoré. A titre d'exemple, on peut citer les carboxylates de fluoroalkyle ou de perfluoroalkyle et les acides correspondants, en particulier l'acide trifluoroacétique (TFA).

La quantité de chacun des constituants est choisie en fonction de la valeur des indices w, x et y.

Dans tous les cas, on évapore le solvant après la mise en contact de la solution avec le substrat.

Le substrat est choisi en fonction de la destination du substrat revêtu par l'oxyfluorure. Dans le domaine de la microélectronique et de l'optique, les substrats généralement utilisés sont des lames de silice ou de silicium.

Le traitement thermique du film obtenu après évaporation du solvant est avantageusement effectué à l'air ou dans un gaz inerte, avec une trempe à une température de 300°C à 600°C, et un maintien à la température de trempe pendant une durée comprise entre 5 min et 24 h.

Le matériau obtenu sous forme de film sur un substrat par le procédé de l'invention à la fin du traitement thermique comprend des groupes OH reliés à l'un des centres métalliques du composé (Mg, Ca, M ou M'). Ces groupes rendent la surface des pores hydrophile. Lorsque le matériau de la présente invention est destiné par exemple à former une couche à faible constante diélectrique, il est préférable que la surface des pores soit hydrophobe. Le matériau selon l'invention tel qu'obtenu à la fin du traitement thermique peut être traité par un agent qui comprend des groupements hydrophobes (par exemple des groupements perfluorés) et des groupements complexants desdits centres métalliques. L'application de l'agent complexant peut être effectuée par des techniques d'imprégnation en phase vapeur ou en solution.

En raison de leurs propriétés, les matériaux de la présente invention sont particulièrement intéressants :
● dans le domaine de la microélectronique, où des matériaux sous forme de couches à faible constante diélectrique ou sous forme de couches isolantes sont recherchés ;
● dans le domaine de l'optique, pour l'élaboration de couches à faible densité optique, de composants dans la construction de miroirs, de filtres, de monochromateurs, de polariseurs, de guides d'ondes.

Les matériaux pour lesquels la surface des pores a été rendue hydrophobe présentent l'avantage supplémentaire de pouvoir être utilisés dans des atmosphères à forte humidité, du fait que ledit caractère hydrophobe empêche la formation d'une couche d'eau à la surface des pores, et par conséquent à la surface des grains de poudre ou du film.

La présente invention est illustrée par les exemples suivants, auxquels elle n'est cependant pas limitée.

### Exemple 1

### Préparation d'un film d'oxyfluorure de magnésium sur un substrat de silicium revêtu d'un film de silice

On a mélangé 7,16 g de Mg(CH₃COO)₂, 4H₂O avec 50 g d'éthanol, 1,5 g d'H₂O et 7,35 g de CF₃COOH. Après dissolution, on a trempé dans la solution obtenue, un substrat de Si revêtu d'un film de silice ayant une épaisseur de 2 nm, puis on l'a retiré à une humidité atmosphérique inférieure à 10% avec une vitesse de retrait de 2 mm.s⁻¹. La couche déposée sur le substrat a ensuite été transférée sous une lampe IR dont la température (au niveau du film) était maintenue à 450°C. Elle est restée à cette température de 450°C pendant 10 min. La douche d'oxyfluorure finale déposée a une épaisseur de 150 nm.

Sur l'échantillon obtenu, on a mesuré la variation de l'indice de réfraction par ellipsométrie spectroscopique en fonction de l'humidité ambiante, au sein d'une chambre à atmosphère contrôlée.

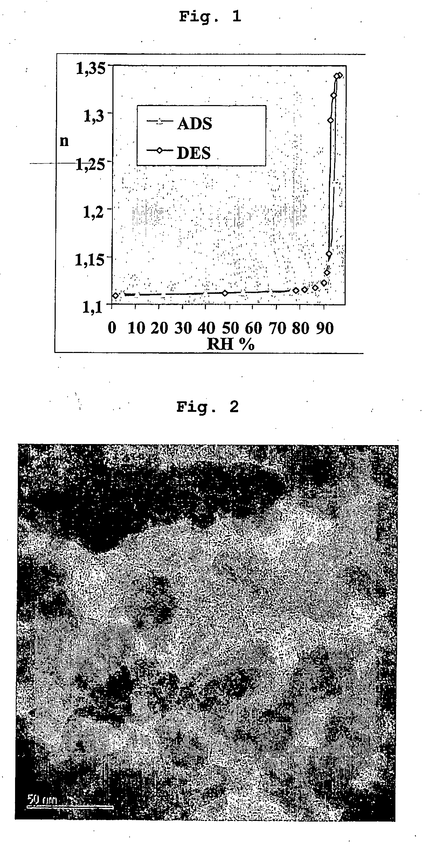

La figure 1 représente la variation de l'indice de réfraction (n) (donné en ordonnée) en fonction du taux d'humidité (RH%) (donné en abscisse).

Sur la figure 1, la courbe ADS représente l'évolution de l'indice n lors de l'augmentation du taux d'humidité, et la courbe DES représente 11 révolution de l'indice n lors de la diminution du taux d'humidité. On constate que l'indice de réfraction ne varie que très faiblement pour les taux d'humidité inférieurs à 90%, (de 1,11 à 1,13 mesuré à une longueur d'onde de 700 nm), la variation étant réversible et ne modifiant pas les propriétés de la couche.

La distribution de tailles de pores (déterminée par adsorption/désorption d'eau) révèle une distribution très étroite de taille de pore sur toute l'épaisseur du film (Cf. isotherme d'adsorption/désorption d'eau DES sur la Figure 1). Ces données correspondent à des films très homogènes.

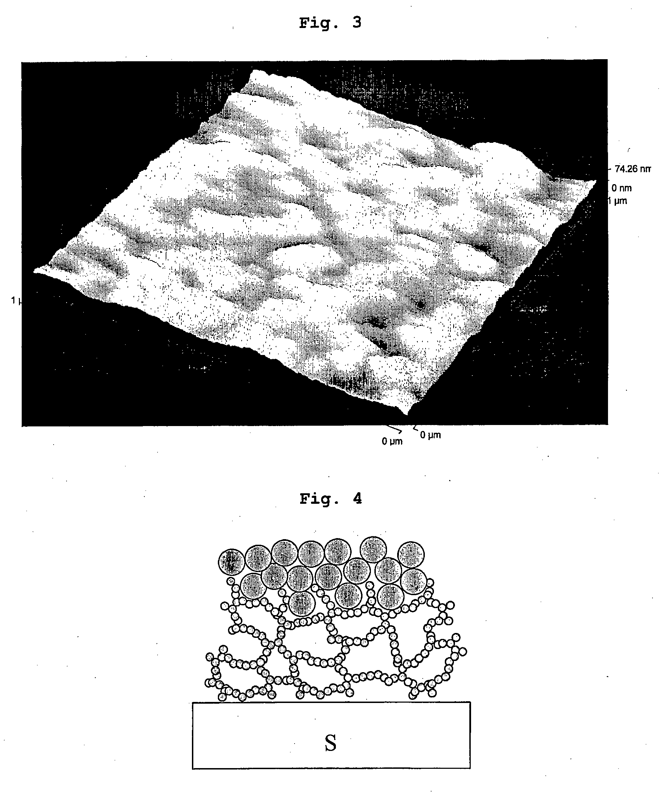

Les figures 2 et 3 représentent respectivement les micrographies obtenues par analyse de l'échantillon par MET (Microscopie Electronique par Transmission) et par AFM (microscopie à champs proche).

L'analyse par diffraction des électrons confirme là cristallinité des particules observée par MET haute résolution (fig. 2).

Sur la figure 3, la surface d'échantillon représentée est un carré dont chacun des côtés est de 1 µm, et la hauteur entre le pic le plus haut et le creux le plus bas est de 74,25 nm. La figure 3 montre que l'oxyfluorure a une structure poreuse composée de particules sphériques dont la dimension moyenne est de 20 nm. Il en résulte, pour la surface de la couche, une sous-rugosité de l'ordre de 20 nm et des cavités plus grandes, de l'ordre de 50 nm. Il a cependant été vérifié que les pores sous-jacents restent inaccessibles. Pour vérifier ce point, on a déposé sur la surface de l'échantillon d'oxyfluorure une couche constituée de particules SiO₂ Ludox® ayant une dimension de 40 nm, et on a constaté que les particules de Ludox® ne pénètrent dans l'échantillon que sur une profondeur de 50 nm dans la première couche, alors que cette couche a une épaisseur de 150 nm. Cette pénétration entraîne une variation des propriétés optiques de la couche initiale seulement sur les 50 nm au dessous de sa surface.

La figure 4 est une représentation schématique de la structure de l'échantillon portant une couche superficielle de particules de silice. Les billes ayant le plus gros diamètre représentent les particules de Ludox®, et les billes de plus petit diamètre représentent les particules semi-cristallines d'oxyfluorure. La couche superficielle est constituée uniquement de billes de Ludox®. La couche en contact direct avec le substrat S est constituée uniquement de particules d'oxyfluorure et elle présente un faible indice de réfraction. La couche intermédiaire représente une couche dans laquelle les différentes particules sont interpénétrées.

Une analyse XPS des films montre la présence de trois principaux éléments (Mg, F et O) dans les proportions atomiques suivantes : 35% Mg, 40% F, 25% O, avec une marge d'erreur de 10%. Ces données correspondent à la formule brute MgF_{1,14}O_{0,15}(OH)_{0,56}. La déconvolution des spectres révèle une seule population de chaque élément, confirmant l'homogénéité de la matrice inorganique et sa (semi)cristallinité.

### Exemple 2

### Préparation d'un film hydrophobe d'oxyfluorure de Mg

Un film d'oxyfluorure préparé selon le mode opératoire de l'exemple 1 a été traité pour rendre hydrophobe la surface des pores, selon le procédé suivant. Le film a été trempé dans une solution aqueuse contenant 1 % en masse d'un perfluorophosphonate (commercialisé sous la dénomination Zonyl FSE fluorosurfactant réf N° 421391 par la société Aldrich) pendant 1 heure. Ensuite, après extraction de la solution de perfluorophosphate, le film a été abondamment lavé à l'eau, puis séché à 150°C pendant 30 min.

L'étude ellipsométrique de la variation de l'indice de réfraction en fonction de l'humidité révèle une augmentation significative de la densité optique au-delà de 95% d'humidité relative, alors que la limite est de 85% pour le film initial non traité. L'indice de réfraction à basse humidité est légèrement modifié par ce greffage : il augmente de 0,01-0,02 par rapport à l'indice du film avant traitement.

### Exemple 3

### Préparation d'un film d'oxyfluorure de Ca et Mg, dopé par Eu²⁺

On a préparé un film d'oxyfluorure de magnésium /calcium (dopé Eu²⁺) sur un substrat de silicium revêtu d'un film de silice ayant une épaisseur de 2 nm.

On a préparé une solution contenant 7,16 g de Mg(CH₃COO)₂, 4 H₂O 0,150 g Ca(CH₃COO)₂, 2 H₂O, 50 g d'éthanol, 1,5 g d'H₂O et 8 g de CF₃COOH, puis on y a ajouté 0,025 g de EuCl₃,6 H₂O. Après dissolution, on a déposé une monocouche de cette solution par trempage d'un substrat de Si dans la solution ainsi obtenue, et retrait à une humidité atmosphérique inférieure à 10% avec une vitesse de retrait de 2mm.s⁻¹. La couche déposée sur le substrat a ensuite été transférée sous une lampe IR dont la température (au niveau du film) était maintenue à 450°C. Elle est restée à cette température de 450°C pendant 10 min. La couche d'oxyfluorure ainsi obtenue a une épaisseur de 150 nm.

Sur l'échantillon obtenu, on a mesuré la variation de l'indice de réfraction n700 par ellipsométrie spectroscopique en fonction de l'humidité ambiante, dans une chambre à atmosphère contrôlée. Les résultats obtenues sont similaires en tous points aux variations de propriétés optiques observées pour l'échantillon de l'exemple 1. Ils sont donnés dans le tableau suivant :

| | | | | | |
|---|---|---|---|---|---|
| RH % | 2 | 50 | 70 | 80 | 90 |
| n700 | 1,10 | 1,102 | 1,11 | 1,12 | 1,14 |

### Exemple 4

### Préparation d'un film d'oxyfluorure de Mg et Si

On a préparé un film d'oxyfluorure de magnésium /silicium sur un substrat de silicium revêtu d'un film de silice ayant une épaisseur de 2 nm.

On a mélangé 7,16 g de Mg(CH₃COO)₂, 4H₂O, 0,175 g Si(CH₃CH₂O)₄, 50 g d'éthanol, 1,5 g d'H₂O et 8 g de CF₃COOH. On a déposé une monocouche de cette solution par trempage du substrat dans la solution ainsi obtenue, et retrait à une humidité atmosphérique inférieure à 10%, avec une vitesse de retrait de 2 mm.s⁻¹. La couche déposée sur le substrat a ensuite été transférée sous une lampe IR dont la température (au niveau du film) était maintenue à 450°C. Elle est restée à cette température de 450°C pendant 10 min. La couche d'oxyfluorure ainsi obtenue a une épaisseur de 150 nm.

Sur l'échantillon obtenu, on a mesure la variation de l'indice de réfraction n700 par ellipsométrie spectroscopique en fonction de l'humidité ambiante, au sein d'une chambre à atmosphère contrôlée. Les résultats obtenus sont similaires aux variations de propriétés optiques observées pour l'échantillon de l'exemple 1. Les indices de réfraction mesurés sont compris entre 1,12 et 1,41 (à une longueur d'onde de 700 nm) pour 0% et 100% d'humidité respectivement. Ils sont indiqués dans le tableau suivant :

| | | | | | | | |
|---|---|---|---|---|---|---|---|
| RH % | 0 | 2 | 50 | 70 | 80 | 90 | 100 |
| n700 | 1,12 | 1,10 | 1,11 | 1,13 | 1,17 | 1,32 | 1,41 |

### Exemple 5

### Préparation d'un film d'oxyfluorure de Mg et de Al

On a préparé un film d'oxyfluorure de magnésium /aluminium sur un substrat de silicium revêtu d'un film de silice ayant une épaisseur de 2 nm.

On a mélangé 7,16 g de Mg(CH₃COO)₂, 4H₂O, 0,100 g de AlCl₃,6 H₂O, 50 g d'éthanol, 1,5 g de H₂O et 8 g de CF₃COOH. Après dissolution, on a déposé une monocouche de solution par trempage du Si dans la solution ainsi obtenue, et retrait à une humidité atmosphérique inférieure à 10% avec une vitesse de retrait de 2 mm.s⁻¹. La couche déposée sur le substrat a ensuite été transférée sous une lampe IR dont la température (au niveau du film) était maintenue à 450°C. Elle est restée à cette température de 450°C pendant 10 min. La couche d'oxyfluorure obtenue a une épaisseur de 150 nm. Sur l'échantillon obtenu, on a mesuré la variation de l'indice de réfraction n700 par ellipsométrie spectroscopique en fonction de l'humidité ambiante, au sein d'une chambre à atmosphère contrôlée. Les résultats obtenus sont similaires aux variations de propriétés optiques observées pour l'échantillon de l'exemple 1. Les indices de réfraction mesurés sont compris entre 1,10 et 1,38 (à 700 nm) pour 0% et 100% d'humidité respectivement. Ils sont indiqués dans le tableau suivant.

| | | | | | | | |
|---|---|---|---|---|---|---|---|
| RH % | 0 | 2 | 40 | 75 | 80 | 90 | 95 |
| n700 | 1,10 | 1,12 | 11,16 | 1,17 | 1,21 | 1,24 | 1,38 |

### Exemple 6

### Préparation d'un film d'oxyfluorure de magnésium sur un substrat de silicium revêtu d'un film de silice

On préparé deux échantillons d'oxyfluorure de magnésium sur un substrat de silicium opaque ayant 2 nm d'épaisseur, en mettant en oeuvre le procédé de l'exemple 1 dans les conditions suivantes :

| Echantillon | 1 | 2 |
|---|---|---|
| Mg(CH₂COO)₂,4H₂O | 7,16 g | 7,16 g |
| éthanol | 50 g | 50 g |
| H₂O | 1,5 g | 1,5g |
| vitesse de retrait | 5 mm.s-1 | 5 mm.s-1 |
| température du traitement thermique | 450°C | 450°C |
| durée du traitement thermique | 20 min | 20 min |
| Epaisseur finale de la couche d'oxyfluorure | 320 nm | 430 nm |

On a déterminé la constante diélectrique de chacun des échantillons obtenus, par mise en oeuvre de la méthode de la sonde au mercure, en appliquant une tension de 0 V et une fréquence de 100 kHz. Le système de mesure est constitué par le substrat de Si opaque. (résistance inférieure à 0,007 Ω/cm), le film d'oxyfluorure poreux et le mercure. Les résultats sont comme suit:

| Echantillon | 1 | 2 |
|---|---|---|
| n700 | 1,095 | 1,105 |
| capacitance | 22,37 pF | 15,96 pF |
| constante diélectrique | 1,63±0,05 | 1,57±0,05 |

## Revendications

1. Matériau constitué par un film d'oxyfluorure sur un substrat, **caractérisé en ce que** :
a) l'oxyfluorure a une structure semi-cristalline poreuse, un indice de réfraction de 1,08 à 1,25, mesuré dans le visible pour un taux d'humidité relative inférieur à 80%, et une composition chimique correspondant à la formule (Mg₍₁₋ₓ₎ Ca_{x)(1-y)}M_{y}F_{(2+(n-2)y-2z-t)}O_{z}(OH)ₜM'_{w} dans laquelle :
● n est la valence de M, n étant de 1 à 4 ;
● M représente au moins un élément choisi parmi Al, Si, Ge, et Ga ;
● M' représente au moins un élément choisi dans le groupe constitué par Co, Cr Ni, Fe, Cu, Sb, Ag, Pd, Cd, Au, Sn, Pb, Ce, Nd, Pr, Eu, Yb, Tb, Dy, Er et Gd ;
● 0 ≤ w < 0,1 ; 0 ≤ x ≤ 1 ; 0 ≤ y ≤ 0,5 ; z < 1 ; t < 2 ; z+t>0 ;
b) le film est constitué d'une seule couche et il a une épaisseur entre 100 nm et 2 µm ;
● le volume de pores est supérieur ou égal à 50% ;
● le diamètre de pores est inférieur ou égal à 100 nm ;
● la paroi des pores est constituée par l'assemblage de particules élémentaires semi-cristallines d'oxyfluorure et son épaisseur est inférieure ou égale à 50 nm.

2. Matériau selon la revendication 1, **caractérisé en ce que** la surface des pores comprend des groupes OH reliés à l'un des centres métalliques du composé (Mg, Ca, M ou M').

3. Matériau selon la revendication 1, **caractérisé en ce que** les centres métalliques à la surface des pores du composé sont complexés par des groupements perfluorés.

4. Matériau selon la revendication 1, **caractérisé en ce que** le substrat est choisi parmi les matériaux métalliques ou les oxydes.

5. Matériau selon la revendication 4, **caractérisé en ce que** le substrat est constitué par le silicium, la silice, le mica, l'alumine, ou l'or.

6. Matériau selon la revendication 1, **caractérisé en ce qu'**il répond à la formule
(Mg₍₁₋ₓ₎Caₓ)_{(1-y)}M_{y}F_{(2+(n-2)y-2z-t)}O_{z}(OH)ₜ.

7. Matériau selon la revendication 6, **caractérisé en ce qu'**il répond à la formule Mg₍₁₋ₓ₎CaₓF_{(2-2z-t)}O_{z}(OH)ₜ.

8. Matériau selon la revendication 7, **caractérisé en ce qu'**il répond à l'une des formules MgF_{(2-2z-t)}O_{z}(OH)ₜ ou CaF_{(2-2z-t)}O_{z}(OH)ₜ.

9. Matériau selon la revendication 1 **caractérisé en ce que** z+t>0,01.

10. Procédé de préparation d'un matériau selon la revendication 1, **caractérisé en ce qu'**il comprend les étapes suivantes :
- dépôt d'un film sur un substrat à partir d'une solution contenant au moins un précurseur de Mg et/ou un moins un précurseur de Ca, au moins un précurseur de F, éventuellement au moins un précurseur de M, éventuellement au moins un précurseur de M' dans un solvant volatil ; ladite la solution de précurseurs ayant une teneur en précurseur de fluor telle que le rapport AF/IM "atome de fluor" / "ions métalliques" soit de 1 à 20 ;
- évaporation du solvant et des éventuels composés volatils formés comme sous-produits de la réaction entre les précurseurs ;
- traitement thermique consistant en une trempe à une température entre 300°C et 600°C, puis maintien à la température de trempe ;
et **en ce que** le film de solution de précurseurs est un film monocouche déposé en une seule étape sur le substrat, les conditions de dépôt du film de solution de précurseurs étant choisies de manière à obtenir, après traitement thermique, un film ayant une épaisseur entre 100 nm et 2 µm en une seule couche.

11. Procédé selon la revendication 10, **caractérisé en ce que** le film de solution est déposé sur le substrat par enduction centrifuge, trempage ou par pulvérisation.

12. Procédé selon la revendication 10, **caractérisé en ce que** la solution de précurseurs a une teneur en précurseurs des ions métalliques (Mg, Ca, M et/ou M') telle que la concentration en ions métalliques soit de 0,1 M à 3 M, de préférence de 0,5 M à 1,5 M.

13. Procédé selon la revendication 10, **caractérisé en ce que** la solution de précurseurs a une teneur en précurseur de fluor telle que le rapport AF/IM "atome de fluor" / "ions métalliques" soit de 3 à 12.

14. Procédé selon la revendication 11, **caractérisé en ce que** le film de solution de précurseur est déposé sur le substrat par trempage, le substrat étant immergé dans la solution de précurseur, puis retiré avec une vitesse de retrait de 0,1 à 8 mm/sec.

15. Procédé selon la revendication 10, **caractérisé en ce qu'**il comprend une étape supplémentaire visant à rendre hydrophobe la surface des pores du matériau.

16. Procédé selon la revendication 10, **caractérisé en ce que** le solvant est choisi parmi les solvants organiques volatils.

17. Procédé selon la revendication 10, **caractérisé en ce qu'**un précurseur d'un élément Mg, Ca, M ou M' est un sel organique, un sel inorganique, un alcoxyde ou un complexe organique dudit élément, choisi de sorte que la partie cationique se combine avec F⁻, O²⁻ ou OH⁻ et que l'anion disparaisse lors du traitement thermique.

18. Procédé selon la revendication 10, **caractérisé en ce que** le composé précurseur de fluor est choisi parmi les composés organiques comprenant un groupement donneur d'électrons complexant lié à un groupement fluoré ou perfluoré.

19. Procédé selon la revendication 18, **caractérisé en ce que** le précurseur du fluor est choisi parmi les carboxylates de fluoroalkyle ou de perfluoralkyle et les acides correspondants.

20. Procédé selon la revendication 10, **caractérisé en ce que** le traitement thermique est effectué à l'air ou dans un gaz inerte, et il consiste en une trempe thermique à une température entre 300 et 600°C et un maintien à la température de trempe pendant une durée de 5 min à 24 heures.

21. Procédé selon la revendication 15, **caractérisé en ce que** le traitement supplémentaire consiste à mettre le matériau obtenu après traitement thermique en contact avec un agent qui comprend des groupements hydrophobes.

22. Utilisation d'un matériau selon la revendication 1, pour l'élaboration de couches à faible densité optique, de composants pour des miroirs, de filtres, de monochromateurs, de polariseurs, ou de guides d'ondes.

23. Utilisation d'un matériau selon la revendication 1, pour l'élaboration de couches à faible constante diélectrique ou de couches isolantes.

## Claims

1. A material composed of an oxyfluoride film on a substrate, **characterized in that**:
a) the oxyfluoride has a porous semicrystalline structure, a refractive index of 1.08 to 1.25, measured in the visible range for a relative humidity level below 80%, and a chemical composition corresponding to the formula (Mg₍₁₋ₓ₎Caₓ)_{(1-y)}M_{y}F_{(2+(n-2)y-2z-t)}O_{z}(OH)ₜM'_{w} in which:
● n is the valency of M, n being 1 to 4;
● M represents at least one element chosen from Al, Si, Ge and Ga;
● M' represents at least one element chosen from the group composed of Co, Cr, Ni, Fe, Cu, Sb, Ag, Pd, Cd, Au, Sn, Pb, Ce, Nd, Pr, Eu, Yb, Tb, Dy, Er and Gd;
● 0 ≤ w < 0.1; 0 ≤ x ≤1; 0 ≤ y ≤ 0.5; z < 1; t < 2; z+t > 0;
b) the film is composed of a single layer and it has a thickness between 100 nm and 2 µm;
● the pore volume is greater than or equal to 50%;
● the pore diameter is less than or equal to 100 nm;
● the wall of the pores is composed of the assembly of elementary semicrystalline oxyfluoride particles and its thickness is less than or equal to 50 nm.

2. The material as claimed in claim 1, **characterized in that** the surface of the pores comprises OH groups bonded to one of the metal centers (Mg, Ca, M or M') of the compound.

3. The material as claimed in claim 1, **characterized in that** the metal centers at the surface of the pores of the compound are complexed by perfluorinated groups.

4. The material as claimed in claim 1, **characterized in that** the substrate is chosen from metallic materials or oxides.

5. The material as claimed in claim 4, **characterized in that** the substrate is composed of silicon, silica, mica, alumina or gold.

6. The material as claimed in claim 1, **characterized in that** it corresponds to the formula:
(Mg₍₁₋ₓ₎Caₓ)_{(1-y)}M_{y}F_{(2+(n-2)y-2z-t)}O_{z}(OH)ₜ.

7. The material as claimed in claim 6, **characterized in that** it corresponds to the formula Mg₍₁₋ₓ₎CaₓF_{(2-2z-t)}O_{z}(OH)ₜ.

8. The material as claimed in claim 7, **characterized in that** it corresponds to one of the formulae MgF_{(2-2z-t)}O_{z}(OH)ₜ or CaF_{(2-2z-t)}O_{z}(OH)ₜ.

9. The material as claimed in claim 1, **characterized in that** z+t > 0.01.

10. Method for preparing a material as claimed in claim 1, **characterized in that** it comprises the following steps:
- depositing a film onto a substrate from a solution containing at least one Mg precursor and/or at least one Ca precursor, at least one F precursor, optionally at least one M precursor, optionally at least one M' precursor in a volatile solvent; said solution of precursors having a fluorine precursor content such that the FA/MI "fluorine atom"/"metal ions" ratio is from 1 to 20,
- evaporation of the solvent and of the possible volatile compounds formed as byproducts of the reaction between the precursors;
- heat treatment consisting of a quench at a temperature between 300°C and 600°C, then maintaining at the quench temperature;
and **in that** the precursor solution film is a single-layer film deposited in a single step onto the substrate, the deposition conditions of the precursor solution film being chosen so as to obtain, after the heat treatment, a film having a thickness between 100 nm and 2 µm in a single layer.

11. The method as claimed in claim 10, **characterized in that** the solution film is deposited onto the substrate by spin coating, dip coating or spray coating.

12. The method as claimed in claim 10, **characterized in that** the solution of precursors has a content of metal ion (Mg, Ca, M and/or M') precursors such that the concentration of metal ions is from 0.1M to 3M, preferably from 0.5M to 1.5M.

13. The method as claimed in claim 10, **characterized in that** the solution of precursors has a fluorine precursor content such that the FA/MI "fluorine atom"/"metal ions" ratio is from 3 to 12.

14. The method as claimed in claim 11, **characterized in that** the precursor solution film is deposited onto the substrate by dip coating, the substrate being immersed in the precursor solution, then withdrawn with a withdrawal rate of 0.1 to 8 mm/sec.

15. The method as claimed in claim 10, **characterized in that** it comprises an additional step that aims to make the surface of the pores of the material hydrophobic.

16. The method as claimed in claim 10, **characterized in that** the solvent is chosen from volatile organic solvents.

17. The method as claimed in claim 10, **characterized in that** a precursor of an Mg, Ca, M or M' element is an organic salt, an inorganic salt, an alkoxide or an organic complex of said element, chosen so that the cationic part combines with F⁻, O²⁻ or OH⁻ and that the anion disappears during the heat treatment.

18. The method as claimed in claim 10, **characterized in that** the fluorine precursor compound is chosen from organic compounds comprising a complexing electron-donor group bonded to a fluorinated or perfluorinated group.

19. The method as claimed in claim 18, **characterized in that** the fluorine precursor is chosen from fluoroalkyl or perfluoroalkyl carboxylates and the corresponding acids.

20. The method as claimed in claim 10, **characterized in that** the heat treatment is carried out in air or in an inert gas, and it consists of a thermal quench at a temperature between 300 and 600°C and a hold at the quench temperature for a duration of 5 min to 24 hours.

21. The method as claimed in claim 15, **characterized in that** the additional treatment consists in bringing the material obtained after the heat treatment into contact with an agent that comprises hydrophobic groups.

22. The use of a material as claimed in claim 1, for producing layers having a low optical density, components for mirrors, filters, monochromators, polarizers or waveguides.

23. The use of a material as claimed in claim 1, for producing layers having a low dielectric constant or insulating layers.

## Patentansprüche

1. Material, das von einem Oxyfluorfilm auf einem Substrat gebildet wird, **dadurch gekennzeichnet, dass**:
a) das Oxyfluor eine halbkristalline poröse Struktur hat, eine Refraktionszahl von 1,08 bis 1,25, gemessen im sichtbaren Bereich bei einer relativen Feuchtigkeit unter 80 %, und eine chemische Zusammensetzung, die der Formel (Mg₍₁₋ₓ₎Ca_{x)(1-y)}M_{y} F_{(2+(n-2)y-2z-t)}O_{z}(OH)ₜM'_{w} entspricht, wobei:
● n die Wertigkeit von M ist, wobei n 1 bis 4 ist,
● M mindestens ein Element darstellt, das aus Al, Si, Ge und Ga ausgewählt ist,
● M' mindestens ein Element darstellt, das aus der Gruppe ausgewählt ist, die von Co, Cr Ni, Fe, Cu, Sb, Ag, Pd, Cd, Au, Sn, Pb, Ce, Nd, Pr, Eu, Yb, Tb, Dy, Er und Gd gebildet wird,
● 0 ≤ w < 0,1; 0 ≤x ≤ 1; 0 ≤ y ≤ 0,5; z < 1; t < 2; z + t > 0;
b) der Film aus einer einzigen Schicht besteht und er eine Dicke zwischen 100 nm und 2 µm hat,
● das Porenvolumen größer oder gleich 50 % ist,
● der Porendurchmesser kleiner oder gleich 100 nm ist,
● die Wand der Poren von der Verbindung halbkristalliner elementarer Oxyfluorpartikel gebildet wird und ihre Dicke kleiner oder gleich 50 nm ist.

2. Material nach Anspruch 1, **dadurch gekennzeichnet, dass** die Oberfläche der Poren OH-Gruppen umfasst, die mit einem der metallischen Zentren der Verbindung (Mg, Ca, M oder M') verbunden sind.

3. Material nach Anspruch 1, **dadurch gekennzeichnet, dass** die metallischen Zentren auf der Oberfläche der Poren der Verbindung durch Perfluorgruppen komplexiert sind.

4. Material nach Anspruch 1, **dadurch gekennzeichnet, dass** das Substrat aus den metallischen Materialien oder den Oxiden ausgewählt ist.

5. Material nach Anspruch 4, **dadurch gekennzeichnet, dass** das Substrat von dem Silizium, dem Siliziumoxid, dem Glimmer, dem Aluminiumoxid oder dem Gold gebildet wird.

6. Material nach Anspruch 1, **dadurch gekennzeichnet, dass** es der Formel (Mg₍₁₋ₓ₎Caₓ)_{(1-y)}M_{y}F_{(2+(n-2)y-2z-t)}O_{z}(OH)ₜ entspricht.

7. Material nach Anspruch 6, **dadurch gekennzeichnet, dass** es der Formel Mg₍₁₋ₓ₎CaₓF_{(2-2z-t)}O_{z}(OH)ₜ entspricht.

8. Material nach Anspruch 7, **dadurch gekennzeichnet, dass** es einer der Formeln MgF_{(2-2z-t)}O_{z}(OH)ₜ oder CaF_{(2-2z-t)}O_{z}(OH)ₜ entspricht

9. Material nach Anspruch 1, **dadurch gekennzeichnet, dass** z + t > 0,01.

10. Verfahren zur Herstellung eines Materials nach Anspruch 1, **dadurch gekennzeichnet, dass** es die folgenden Schritte umfasst:
- Aufbringen eines Films auf ein Substrat aus einer Lösung, die mindestens einen Mg-Vorläufer und/oder mindestens einen Ca-Vorläufer enthält, mindestens einen F-Vorläufer, eventuell mindestens einen M-Vorläufer, eventuell mindestens eine M'-Vorläufer in einem flüchtigen Lösungsmittel, wobei die Vorläufer-Lösung einen Fluor-Vorläufergehalt hat, der derart ist, dass das AF/IM-Verhältnis "Fluoratom" / "Metallionen" 1 bis 20 ist,
- Verdampfen des Lösungsmittels und der eventuellen flüchtigen Verbindungen, die als Nebenprodukt der Reaktion zwischen den Vorläufern entstanden sind,
- thermische Behandlung, die in einem Eintauchen bei einer Temperatur zwischen 300 °C und 600 °C besteht, danach dem Halten der Eintauchtemperatur,
und dass der Vorläuferlösungsfilm ein einschichtiger Film ist, der in einem einzigen Schritt auf das Substrat aufgebracht wird, wobei die Bedingungen des Aufbringens des Vorläuferlösungsfilms derart ausgewählt sind, dass nach thermischer Behandlung ein Film entsteht, der eine Dicke zwischen 100 nm und 2 µm in einer einzigen Schicht hat.

11. Verfahren nach Anspruch 10, **dadurch gekennzeichnet, dass** der Lösungsfilm auf das Substrat durch zentrifugales Beschichten, Eintauchen oder Sprühen aufgebracht wird.

12. Verfahren nach Anspruch 10, **dadurch gekennzeichnet, dass** die Vorläuferlösung einen Gehalt an Metallionenvorläufern (Mg, Ca, M und/oder M') hat, der derart ist, dass die Metallionenkonzentration 0,1 M bis 3 M, vorzugsweise 0,5 M bis 1,5 M, beträgt.

13. Verfahren nach Anspruch 10, **dadurch gekennzeichnet, dass** die Vorläuferlösung einen Fluorvorläufergehalt hat, der derart ist, dass das Verhältnis AF/IM "Fluoratom" / "Metallionen" 1 bis 20, vorzugsweise 3 bis 12, beträgt.

14. Verfahren nach Anspruch 11, **dadurch gekennzeichnet, dass** der Vorläuferlösungsfilm auf das Substrat durch Eintauchen aufgebracht wird, wobei das Substrat in die Vorläuferlösung eingetaucht und dann mit einer Rückzugsgeschwindigkeit von 0,1 bis 8 mm/s zurückgezogen wird.

15. Verfahren nach Anspruch 10, **dadurch gekennzeichnet, dass** es einen zusätzlichen Schritt umfasst, der darauf abzielt, die Oberfläche der Poren des Materials wasserabweisend zu machen.

16. Verfahren nach Anspruch 10, **dadurch gekennzeichnet, dass** das Lösungsmittel aus den organischen flüchtigen Lösungsmitteln ausgewählt ist.

17. Verfahren nach Anspruch 10, **dadurch gekennzeichnet, dass** ein Vorläufer eines Elements Mg, Ca, M oder M' ein organisches Salz, ein anorganisches Salz, ein Alcoxid oder ein organischer Komplex des Elements ist, wobei die Auswahl derart erfolgt, dass sich der kationische Teil mit F, O²⁻ oder OH⁻ verbindet und dass das Anion bei der thermischen Behandlung verschwindet.

18. Verfahren nach Anspruch 10, **dadurch gekennzeichnet, dass** die Fluorvorläuferverbindung aus den organischen Verbindungen ausgewählt ist, die eine komplexierende elektronengebende Gruppe umfassen, die mit einer Fluor- oder Perfluorgruppe verbunden ist.

19. Verfahren nach Anspruch 18, **dadurch gekennzeichnet, dass** der Fluorvorläufer aus den Fluoralkyl- oder Perfluoralkylcarboxylaten und den entsprechenden Säuren ausgewählt ist.

20. Verfahren nach Anspruch 11, **dadurch gekennzeichnet, dass** die thermische Behandlung in der Luft oder in einem Inertgas durchgeführt wird und dass sie aus einem thermischen Eintauchen bei einer Temperatur zwischen 300 und 600 °C und einem Halten bei Eintauchtemperatur während einer Dauer von 5 Minuten bis 24 Stunden besteht.

21. Verfahren nach Anspruch 15, **dadurch gekennzeichnet, dass** die zusätzliche Behandlung darin besteht, das nach der thermischen Behandlung gewonnene Material mit einem Mittel in Kontakt zu bringen, das wasserabweisende Gruppen umfasst.

22. Verwendung eines Materials nach Anspruch 1 zur Herstellung von Schichten mit geringer optischer Dichte, von Bestandteilen von Spiegeln, von Filtern, von Monochromatoren, von Polarisatoren oder von Wellenleitern.

23. Verwendung eines Materials nach Anspruch 1 zur Herstellung von Schichten mit niedriger dielektrischer Konstante oder von Isolierschichten.
